# EUROPEAN PATENT APPLICATION

(11) **EP 0 944 015 A2**
(43) Date of publication of application: **22.09.1999**
(21) Application number: 99302043.7
(22) Date of filing: 17.03.1999
(51) Int. Cl.: G06K 7/00

(54) **Interrogator with variable maximum output power**

(30) Priority: 17.03.1998 ZA 9802235
(71) Applicant: Supersensor (Proprietary) Limited, Goodwood 7460 (ZA)
(72) Inventor: Turner, Christopher Gordon Gervase, Halfway House, Gauteng (ZA); Kruger, Johan Dawid, Witkoppen, Gauteng (ZA)
(74) Representative: Wright, Howard Hugh Burnby

(57) **Abstract**

A method of reading a plurality of RF transponders (14.1 to 14.15) is disclosed and claimed. The method includes the steps of transmitting a first energizing signal generating a first energizing field having a first range (Pm₁), receiving response signals from transponders (14.1 to 14.3) within the range and reading data in the signals. The method further includes the step of causing transponders (14.1 to 14.3) just read to cease responding to the energizing signal. Thereafter a second energizing signal generating a second energizing field having a second range (Pm₂) is transmitted. Response signals from remaining transponders (14.4 to 14.8) within the second field are received and read. Thereafter transponders (14.4 to 14.8) are also caused to cease responding, before a third energizing signal intended to read transponders (14.9 to 14.15) is transmitted. An electronic identification system, an interrogator for transponders and a method of searching and finding a selected transponder amongst a plurality of transponders distributed in a volume are also disclosed and claimed.

## Description

### INTRODUCTION AND BACKGROUND

THIS invention relates to an electronic identification system. The invention more particularly relates to an identification system including a radio frequency (RF) interrogator or reader and a plurality of transponders.

In a known system of the aforementioned kind, the interrogator transmits an energizing signal of a substantially constant (non-variable) maximum output power, to create or form an energizing field. Transponders located in the field are energized and are adapted to back-scatter modulate the signal with identification (ID) code data characteristic of the transponder. The interrogator thereupon receives the modulated signal, reads the data and transmits an acknowledgement signal, which signal causes the transponder just read to cease responding to the interrogation signal. With the aforementioned system, initially all the transponders in the energizing field respond in the manner hereinbefore described and due to interference and collisions between the substantially concurrent back-scattered signals, the system time to read all the transponders one by one, is not an optimum.

In US patent 5,500,651 to Texas Instruments Inc there is disclosed a completely different system and method for communicating between a reader and a transponder forming part of a plurality of transponders. The system and method disclosed are alleged to be a cheap system and method of reading multiple RF-ID transponders, without the need for any particular transponder "anti-collision" protocol. In use, the reader transmits a first interrogation signal at a first maximum power level. More than one transponder may respond, but the reader latches onto the stronger or dominant signal. The dominant response signal is read by the reader, but the transponder is not switched off as in the protocol referred to hereinbefore. Thereafter a second interrogation signal is transmitted at a second power level, which is lower than the first maximum power level. The date read is compared with that of the first reading and if consistent, it is assumed that the reading was successful. The adjustment in the power level is purely to verify that a transponder already read was read correctly and successfully. Once a transponder is read, the transponders and the reader need to be moved relative to one another, to ensure that a signal from another transponder now becomes the dominant signal, otherwise the same transponder will be read all the time. The disadvantages are that relative movement between the transponders on the one hand and reader on the other is required. This makes the system and method taught not suitable for many applications where such relative movement is not practical or not possible. Furthermore, the method includes a redundancy intended to verify readings. This inherent redundancy must impair the reading speed of the system and method.

### OBJECT OF THE INVENTION

Accordingly, it is an object of the present invention to provide an alternative method of reading a plurality of transponders, an alternative electronic identification system and an alternative interrogator, with which the applicant believes the aforementioned disadvantages may at least be alleviated.

### SUMMARY OF THE INVENTION

According to the first aspect of the invention there is provided a method of reading a plurality of transponders, the method including the steps of:
- transmitting a first interrogation signal to a first group only of the plurality of transponders;
- receiving response signals from the first group of transponders and reading identification code data included in respective response signals;
- disabling transponders the identification code data of which has been read;
- transmitting a further interrogation signal to a further group of the plurality of transponders including the first group of transponders;
- receiving response signals from active transponders in the further group of transponders and reading identification code data included in respective response signals; and
- disabling transponders the identification code data of which has been read.

The transponders may be active transponders, but typically are passive transponders. Hence the first interrogation signal and further interrogation signal may include first and further energizing signals respectively serving to energize the first and further groups of transponders respectively.

The first and second energizing signals may be transmitted by setting a power level of means for transmitting an energizing signal at a first and a second level respectively. Preferably the second level is higher than the first level. The second level may be higher in that the amplitude of the energizing signal may be bigger and/or the duty cycle thereof may be higher.

The transponders may be disabled by transmitting acknowledgement signals to the transponders the identification code data of which has been read, thereby to cause the transponders to cease responding to interrogation signals.

The identification code data of transponders in the first group of transponders is preferably read sequentially and the identification code data of active transponders in the further group of transponders is also preferably read sequentially.

Also included within the scope of the present invention is an electronic identification system including:
- a plurality of transponders;
- interrogator means including:
   - energizing signal transmitting means controllable to transmit at least first and second energizing signals to generate at least partially overlapping first and second energizing fields having first and second maximum ranges respectively:
   - receiver means for receiving response signals including data from energized transponders;
   - reader means for reading data in response signals received;
   - acknowledgement signal transmitting means for transmitting an acknowledgement signal to cause each transponder the data of which has been read to cease responding to energizing signals; and
   - control means for the energizing signal transmitting means to cause it to transmit a selected one of the first and second energizing signals.

The first energizing signal may be generated at a first output power level of the transmitting means and the second energizing signal may be generated at a second output power level of the transmitting means. In use, the second level is preferably higher than the first level.

Also included within the scope of the present invention is an interrogator for an electronic identification system including a plurality of transponders, the interrogator including:
- energizing signal transmitting means controllable to transmit at least first and second energizing signals, to generate at least partially overlapping first and second energizing fields having first and second maximum ranges respectively;
- receiver means for receiving from energized transponders in the fields response signals including data;
- reader means for reading data in response signals received;
- acknowledgement signal transmitting means for transmitting in response to data in a response signal of one of the transponders an acknowledgement signal to cause that transponder to cease responding to the energizing signal; and
- control means for the energizing signal transmitting means to cause the transmitting means to transmit a selected one of the first and second energizing signals.

The control means may include a user manipulatable member on the interrogator for switching between the first and second energizing signals.

Alternatively, the control means may include a programmable controller sensitive to data relating to a rate at which the data of transponders is being read and responsive to control the transmitting means to switch between the first and second energizing signals, to achieve a desired rate of reading the transponder data.

Further according to the invention, the interrogator may include a mode selection switch enabling selection between a read mode and a search and find mode, the control means may be sensitive to the mode selection switch and responsive when the search and find mode is selected, to connect a directional antenna to the energizing signal transmitting means and to inhibit the acknowledgement signal transmitting means.

According to another aspect of the invention there is provided a method of searching and locating a selected transponder amongst a plurality of transponders distributed in a volume, the method including the steps of:
- utilizing a directional antenna and transmitting an energizing signal having a maximum range;
- scanning the volume by means of the signal;
- receiving response signals from transponders in the volume;
- identifying the selected transponder by the response signals and determining a general direction wherein it is located;
- utilizing the direction determined, to move the antenna closer to the selected transponder; and
- progressively reducing the range of the signal while still maintaining the antenna and selected transponder within range of one another.

The step of identifying the selected transponder may include the steps of storing unique data relating to the selected transponder in an interrogator connected to the directional antenna, causing each transponder energized to respond to the energizing signal with a response signal including unique data relating to that transponder; comparing the received data to the stored data relating to the selected transponder; and generating a read signal when data received corresponds to the stored data.

In some embodiments the read signal may be utilized to drive indicator means for indicating to a user carrying the interrogator when the data received corresponds to the stored data, so that the user may then manually reduce the range of the energizing signal.

In other embodiments the read signal may be utilized by a controller forming part of the interrogator, automatically to reduce the range of the signal while still maintaining the antenna and selected transponder within range of one another.

### BRIEF DESCRIPTION OF THE ACCOMPANYING DIAGRAMS

The invention will now further be described, by way of example only, with reference to the accompanying diagrams wherein:
- figure 1: is a basic block diagram of an electronic identification system according to the invention;
- figure 2: is a block diagram of a variable output power interrogator according to the invention;
- figure 3: is a basic diagram illustrating one application of the interrogator according to the invention; and

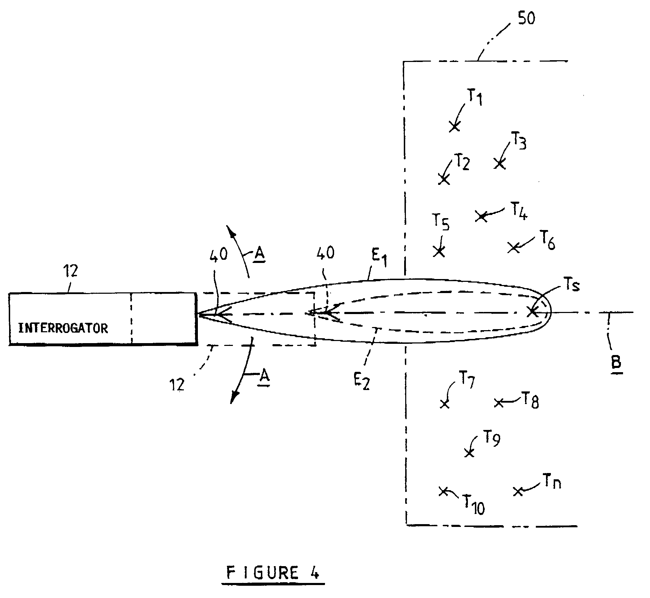

- figure 4: is a basic diagram illustrating a method according to the invention of searching and locating a selected transponder amongst a plurality of transponders distributed in a volume.

### DESCRIPTION OF PREFERRED EMBODIMENTS OF THE INVENTION

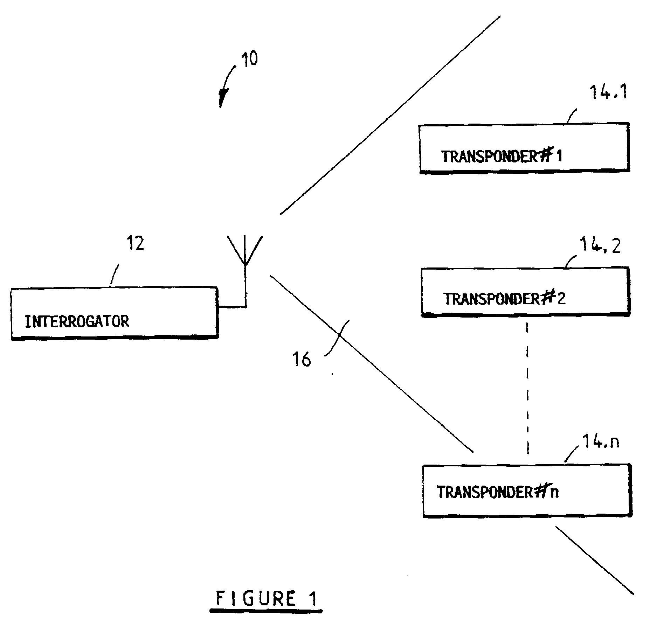

An electronic identification system according to the invention is generally designated 10 in figure 1. The system includes a radio frequency (RF) interrogator or reader 12 and a plurality of associated passive transponders, transponder #1 to transponder #n designated 14.1 to 14.n.

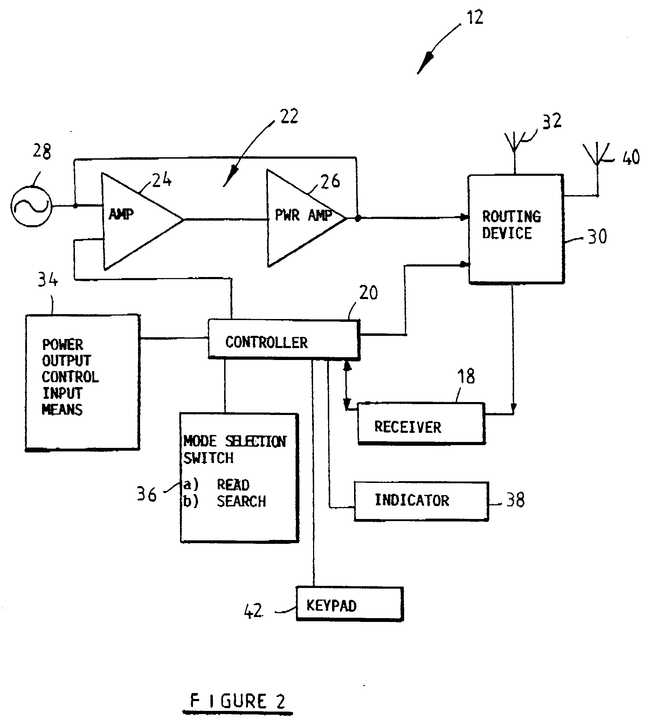

As will be explained in more detail hereinafter, the interrogator 12, in use, and when in a read mode, transmits via transmitter stage 22 (shown in figure 2) a RF interrogation signal, thereby creating an energizing field 16. The transponders in the field are energized by the signal and each transponder back-scatter modulates the signal with identification code data characteristic of that transponder.

As shown in figure 2, the interrogator 12 includes a receiver stage 18 for receiving the back-scatter modulated signal and the controller 20 reads the identification code data. The interrogator then transmits an acknowledgement signal which is received by the transponder just read. That transponder is then disabled and it ceases to respond to the interrogation signal.

Apart from the aforementioned controller 20 and receiver stage 18, the interrogator also includes a carrier signal generator in the form of oscillator 28 and transmitter stage 22 including a variable gain amplifier 24 and a power amplifier 26. Routing device 30, under control of controller 20, connects either the transmitter stage 22 or the receiver stage 18 to read antenna 32 alternatively directional antenna 40, as hereinafter described.

An important feature of the interrogator 12 is that the reading range thereof is adjustable, more particularly by adjusting the output power of an energizing signal transmitted thereby. The power may be adjusted by varying the amplitude of the energizing signal and/or the duty cycle of pulses in the interrogation signal. A user manipulatable output power control input knob 34 is connected to controller 20. The controller 20 generates a reference voltage, which is dependent on the position of the knob. This reference voltage is provided as one input of a variable gain amplifier 24. The other input is connected to a feed-back loop also connected to the output of power amplifier 26. The output power level is thus manually adjustable by a user, by manipulating input knob 34.

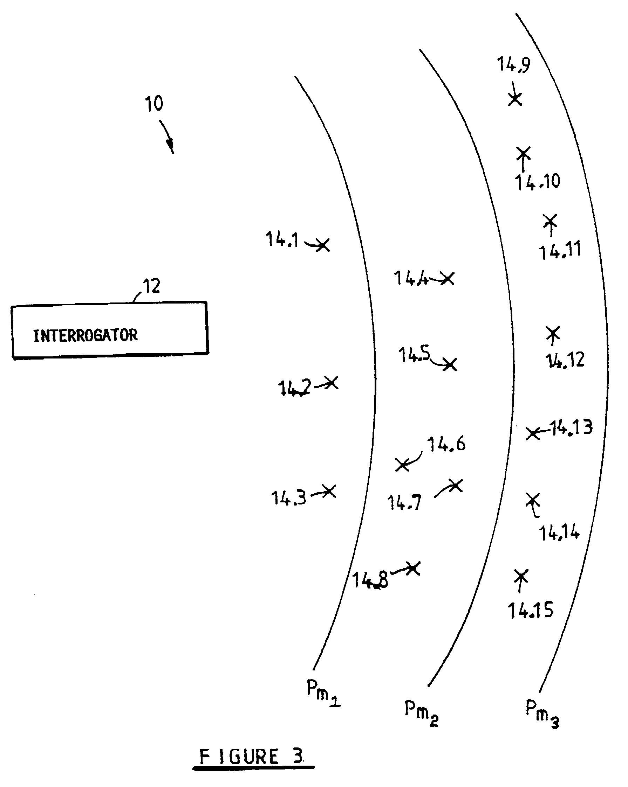

The effect of the variable output power level is schematically shown in figure 3. With the knob on a first setting, power Pm₁ is transmitted so that the interrogator has a first range; with knob 34 on a second setting, power Pm₂ is transmitted so that the interrogator has a second range; and with the knob on a third setting, power Pm₃ is transmitted, wherein Pm₃ > Pm₂ > Pm_{1.} The third range is larger than the second, which is larger than the first.

With the knob on the first setting and when power Pm₁ is transmitted, only transponders 14.1 to 14.3 receive sufficient energy from the interrogator to respond to the signal. With the knob on the second setting and when power Pm₂ is transmitted, transponders 14.1 to 14.8 receive sufficient energy. When the knob is on the third setting and when power Pm₃ is transmitted, transponders 14.1 to 14.15 receive sufficient energy.

In use, when a user wants to read transponders 14.1 to 14.15, instead of operating the interrogator on Pm₃ only (as is the case with prior art interrogators), the user may first switch the knob to the aforementioned first setting to transmit power Pm₁. Since there are only three transponders responding, less collisions and corruption of data will occur, which should result in a faster time to read all three transponders. As each of transponders 14.1 to 14.3 is read sequentially, the interrogator transmits an acknowledgement signal to the relevant transponder, to cause it to switch to a sleep mode wherein it is disabled and no longer responds to the energizing signal. Thereafter, the knob is set on the second setting. Because transponders 14.1 to 14.3 are in the sleep mode, only transponders 14.4 to 14.8 would respond, which again should result in faster reading times. Finally, the knob is set to the third setting and since transponders 14.1 to 14.8 are now in the sleep mode, transponders 14.9 to 14.15 only respond. Again faster reading times may be achieved, which may also result in a faster system reading time for reading all the transponders.

In other embodiments the controller 20 may be sensitive to the number and/or rate of transponders read and may be configured automatically to increase or decrease the power level (thereby to increase or decrease the number of transponders being energized at a time) in accordance with a program, to optimize the speed of reading a plurality of transponders. In both the manual and automatic modes the power may be varied continuously or in step-wise manner.

A method of searching and finding a selected transponder Ts amongst a plurality of transponders T₁ to Tₙ distributed in a large storage volume 50 is illustrated in figure 5.

This method is performed by switching the mode selection switch 36 (shown in figure 2) to a search mode. When in this mode, directional antenna 40 is connected to the routing device 30. Furthermore, the interrogator 12 does not transmit the acknowledgement signal after reception and successful reading of a transponder identification code, as is the case in the aforementioned read mode.

The code of the transponder Ts to be found is entered into controller 20 via keypad 42. The transponder Ts is found by setting the knob 34 in the maximum output power position and determining the general direction B of the transponder, by scanning the storage volume 50 including the transponders with the interrogator as shown at A. Detection of transponder Ts and reading of the code by the interrogator 12 is indicated by bleeper 38.

Once the general direction B has been determined, the user moves closer to the transponder (as shown in dotted lines in figure 5) and progressively decreases the output power by manipulating knob 34. The bleeper 38 indicates that the transponder to be found remains in the energizing field, the size of which progressively decreases, as shown at E₁ and E₂ respectively.

With the knob on the minimum setting, the field is at its smallest and if the bleeper still indicates that the transponder to be found is in the field, the user can determine the position of the transponder accurately within that small field.

In other embodiments the adjustment of the output power may be performed automatically under control of the controller. The adjustment may be continuous or in step-wise manner.

It will be appreciated that there are many variations in detail on the system and method according to the invention without departing from the scope and spirit of the appended claims.

## Claims

1. A method of reading a plurality of transponders, the method including the steps of:
- transmitting a first interrogation signal to a first group only of the plurality of transponders;
- receiving response signals from the first group of transponders and reading identification code data included in respective response signals;
- disabling transponders the identification code data of which has been read;
- transmitting a further interrogation signal to a further group of the plurality of transponders including the first group of transponders;
- receiving response signals from active transponders in the further group of transponders and reading identification code data included in respective response signals; and
- disabling transponders the identification code data of which has been read.

2. A method as claimed in claim 1 wherein the transponders are passive transponders and wherein the first interrogation signal and further interrogation signal include first and further energizing signals respectively serving to energize the first and further groups of transponders respectively.

3. A method as claimed in claim 2 wherein the first and second energizing signals are transmitted by setting a power level of means for transmitting an energizing signal at a first and a second level respectively.

4. A method as claimed in claim 3 wherein the second level is higher than the first level.

5. A method as claimed in any one of claims 1 to 4 wherein the transponders are disabled by transmitting acknowledgement signals to the transponders the identification code data of which has been read, thereby to cause the transponders to cease responding to interrogation signals.

6. A method as claimed in any one of claims 1 to 5 wherein the identification code data of transponders in the first group of transponders is read sequentially and wherein the identification code data of active transponders in the further group of transponders is read sequentially.

7. An electronic identification system including:
- a plurality of transponders;
- interrogator means including:
- energizing signal transmitting means controllable to transmit at least first and second energizing signals to generate at least partially overlapping first and second energizing fields having first and second maximum ranges respectively;
- receiver means for receiving response signals including data from energized transponders;
- reader means for reading data in response signals received;
- acknowledgement signal transmitting means for transmitting an acknowledgement signal to cause each transponder the data of which has been read to cease responding to energizing signals; and
- control means for the energizing signal transmitting means to cause it to transmit a selected one of the first and second energizing signals.

8. An electronic identification system as claimed in claim 7 wherein the first energizing signal is generated at a first output power level of the transmitting means, wherein the second energizing signal is generated at a second output power level of the transmitting means and wherein the second level is higher than the first level.

9. An interrogator for an electronic identification system including a plurality of transponders, the interrogator including:
- energizing signal transmitting means controllable to transmit at least first and second energizing signals, to generate at least partially overlapping first and second energizing fields having first and second maximum ranges respectively;
- receiver means for receiving from energized transponders in the fields response signals including data;
- reader means for reading data in response signals received;
- acknowledgement signal transmitting means for transmitting in response to data in a response signal of one of the transponders an acknowledgement signal to cause that transponder to cease responding to the energizing signal; and
- control means for the energizing signal transmitting means to cause the transmitting means to transmit a selected one of the first and second energizing signals.

10. An interrogator as claimed in claim 9 wherein the control means includes a user manipulatable member on the interrogator for switching between the first and second energizing signals.

11. An interrogator as claimed in claim 9 wherein the control means includes a programmable controller sensitive to data relating to a rate at which the data of transponders is being read and responsive to control the transmitting means to switch between the first and second energizing signals, to achieve a desired rate of reading the transponder data.

12. An interrogator as claimed in any one of claims 9 to 11 further including a mode selection switch enabling selection between a read mode and a search and find mode and wherein the control means is sensitive to the mode selection switch and responsive when the search and find mode is selected, to connect a directional antenna to the energizing signal transmitting means and to inhibit the acknowledgement signal transmitting means.

13. A method of searching and locating a selected transponder amongst a plurality of transponders distributed in a volume, the method including the steps of:
- utilizing a directional antenna and transmitting an energizing signal having a maximum range;
- scanning the volume by means of the signal;
- receiving response signals from transponders in the volume;
- identifying the selected transponder by the response signals and determining a general direction wherein it is located;
- utilizing the direction determined, to move the antenna closer to the selected transponder; and
- progressively reducing the range of the signal while still maintaining the antenna and selected transponder within range of one another.

14. A method as claimed in claim 13 wherein the step of identifying the selected transponder includes the steps of storing unique data relating to the selected transponder in an interrogator connected to the directional antenna, causing each transponder energized to respond to the energizing signal with a response signal including unique data relating to that transponder; comparing the received data to the stored data relating to the selected transponder; and generating a read signal when data received corresponds to the stored data.

15. A method as claimed in claim 14 wherein the read signal is utilized to drive indicator means for indicating to a user carrying the interrogator when the data received corresponds to the stored data; and wherein the user then manually reduces the range of the energizing signal.

16. A method as claimed in claim 14 wherein the read signal is utilized by a controller forming part of the interrogator automatically to reduce the range of the signal while still maintaining the antenna and selected transponder within range of one another.
